# EUROPÄISCHE PATENTSCHRIFT

(11) **EP 2 628 377 B1**
(45) Veröffentlichungstag und Bekanntmachung des Hinweises auf die Patenterteilung: **17.09.2014**
(21) Anmeldenummer: 13000483.1
(22) Anmeldetag: 31.01.2013
(51) Int. Cl.: A01D 42/06, A01D 43/16

(54) **Rasenkanten-Schneidvorrichtung**
Lawn edge cutting device
Dispositif coupe-bordure

(30) Priorität: 16.02.2012 DE 102012101235
(43) Veröffentlichungstag der Anmeldung: 21.08.2013
(73) Patentinhaber: Drees, Hubert, 48268 Greven (DE)
(72) Erfinder: Drees, Hubert, 48268 Greven (DE)
(74) Vertreter: Hoffmeister, Helmut

(56) Entgegenhaltungen:
- US-A- 4 965 990
- US-A1- 2002 153 145
- US-A1- 2007 163 221
- US-A1- 2011 083 414

## Beschreibung

Die Erfindung betrifft eine an einem selbstfahrenden Fahrzeug lösbar anbringbare Rasenkanten-Schneidvorrichtung, die umfasst:
- eine Halterung, die an einer Felge eines Rades des Fahrzeuges, auf dessen Außenseite angeordnet ist, wobei die Halterung wenigstens ein Halteelement aufweist, das an der Felge des Rades kraft- und/oder formschlüssig abnehmbar befestigbar ist
- eine rotierbare Messerscheibe,
- und einen Hebelmechanismus zum Verstellen der Messerscheibe.

Eine Rasenkanten-Schneidvorrichtung ist aus US 7 938 193 B2 bekannt. Diese Rasenkanten-Schneidvorrichtung ist jedoch nicht an der Felge eines der vier Räder des Fahrzeuges angebracht, sondern an einem Rahmen ("body 15") und dort wiederum an einen Schneidarm ("cutting arm 30"). Diese Rasenkanten-Schneidvorrichtung bzw. der die Rasenkanten-Schneidvorrichtung tragende Rahmen ist speziell zur Montage an Fahrzeugen mit einer Lastmulde konzipiert. Der Einsatz an unterschiedlichen Fahrzeugen ist insofern nur dann möglich, wenn der Rahmen mit dem Fahrzeug kompatibel ist.

US 2007/0163221 A1 zeigt einen Aufsitz-Rasenmäher mit einer Rasenkanten-Schneideinrichtung, welche mittels eines Hebels ("support arm 40") mit dem Fahrgestell des Aufsitz-Rasenmähers verbunden ist. Ein variabler Anbau an verschiedene Typen von Aufsitz-Rasenmähern ist nicht vorgesehen. Die Rasenkanten-Schneideinrichtung ist auch nicht mit der Felge eines Rades gekoppelt bzw. an dieser gelagert.

US 4965990 A zeigt eine Rasenkanten-Schneideinrichtung für einen handgeführten Rasenmäher. Die Rasenkanten-Schneideinrichtung ist über Abstützböcke ("bracket 32, 36") mit dem Gehäuse des Rasenmähers verbunden. Eine direkte Kopplung an die Felge eines Rades ist nicht vorgesehen.

Nachteilig an den bekannten Rasenkantenschneidern ist, dass eine Befestigungsvorrichtung am Rahmen des Fahrzeuges, bei dem es sich um einen Kleintraktor oder um einen handgeführten Rasenmäher handeln kann, vorgesehen ist. Die universelle Einsetzbarkeit der Vorrichtung, insbesondere auch als nachträglich anzubauendes Zubehöraggregat an unterschiedliche Kleintraktoren ist damit gar nicht oder nur eingeschränkt möglich.

Aus US 2011/0083414 A1 ist eine weitere Rasenkanten-Schneideinrichtung für einen handgeführten Rasenmäher bekannt, bei der ein Schneidmesser mit einem Rad des Rasenmähers verbunden ist. In einer einfachen Ausführungsform handelt es sich bei dem Schneidmesser um eine Messerscheibe, die im Bedarfsfall mit Befestigungselementen (edger fastener 36) mit dem Rad verbunden wird. Vorzugsweise ist die Drehachse des Rades von der Drehachse der Messerscheibe beabstandet. Nachteilig an dieser Schneideinrichtung ist, dass sie, soweit der Rasenmäher zum Mähen des Rasens genutzt werden soll, entweder komplett demontiert oder mittels einer komplizierten Kupplungseinrichtung in Eingriff gebracht werden muss. Weiterhin ist diese Schneideinrichtung ausschließlich zur Anbringung an von Hand geführte Rasenmäher geeignet.

Die Aufgabe der Erfindung ist, eine gattungsgemäße, am Fahrzeug abnehmbar anbringbare Rasenkanten-Schneidvorrichtung zu konzipieren, die von dem bekannten Konstruktionsprinzip abweicht und die am Rad des Fahrzeuges sicher montiert werden kann, ohne zusätzliche Befestigung am Fahrzeugrahmen vornehmen zu müssen und wobei Rasenmäherrad und Schneidvorrichtung voneinander entkoppelt sind, so dass die Schneidvorrichtung relativ zum Rasenmäherrad verschwenkt werden kann.

Diese Aufgabe ist durch eine Rasenkanten-Schneidvorrichtung der eingangs genannten Art gelöst, bei der
- die Halterung (10) ein Achselement (7.1, 7.2) umfasst,
- der Hebelmechanismus (4) einen ersten, mit einem Griff (25) versehenen Hebelarm (24) und einen zweiten, gegenüber dem ersten unter einem Einstellwinkel (α) angeordneten und die Messerscheibe (3) tragenden Hebelarm (26) aufweist.
- das Halteelement eine zentral angeordnete Öffnung zur Durchführung des Achselementes aufweist,
- das Achselement in einer Axialrichtung auf einer Radnabe festlegbar ist und sich gegen das Halteelement abstützt,
- und dass das Achselement einen Zapfen aufweist, auf dem der die Messerscheibe tragende Hebelmechanismus aufgesetzt ist, wobei der Zapfen des Achselementes im montierten Zustand in einer Lagerbüchse gelagert ist, die am zweiten, die Messerscheibe tragenden Hebelarm angeordnet ist.

Vorzugsweise weist das Halteelement drei radial verstellbare Spreiz- bzw. Spannarme auf, deren freie, an einer Peripherie des Halteelementes liegende Enden im einmontierten Zustand auf einen Felgenkranz gerichtet sind. Darüber hinaus kann das Halteelement stern- bis rundscheibenförmig, tellerförmig, polygonal, insbesondere dreieckig sein. Wichtig ist, dass am Halteelement bewegliche Spannarme angeordnet sind, mit denen eine regulierbare, gleichmäßig am Umfang verteilte Spannkraft gegen den Felgenkranz ausgeübt werden kann. Vorzugsweise greifen die Enden der Spannarme in vorhandene Felgeneinkerbungen ein.

Von großem Vorteil ist, dass die Halterung keine Befestigungspunkte am Chassis des Fahrzeuges erfordert. Das Halteelement der Halterung kann in die Felge von unterschiedlicher Größe eingeklemmt werden.

Das Halteelement kann in einem Materialstück aus Metallblech, z. B. als Formstück gefertigt sein.

Vorzugsweise weist das Halteelement eine mittig liegende, sich bis zur Öffnung hin verjüngende Mulde auf, in die ein längs des Achselementes verschiebbarer Drehkörper während der Montage an der Felge eingreift.

Das Achselement kann in einen Zapfen auslaufen, an dem der die Messerscheibe tragende Hebelmechanismus eingesetzt ist.

Das Achselement kann zumindest auf einem Teil seiner Gesamtlänge ein Außengewinde aufweisen. Vorzugsweise erstreckt sich das Außengewinde bis zum Zapfen bzw. bis zu einem am Zapfen angeordneten Anschlagelement, an dem sich eine Lagerbüchse des Hebelmechanismus abstützen kann.

Ferner kann das Achselement an seinem dem Zapfen gegenüber liegenden, freien Ende eine Hülse oder ein trichterförmiges Aufsatzstück zum Aufsetzen an der Radnabe tragen. Das besagte Aufsatzstück kann ein Innengewinde aufweisen. Die Hülse kann optional auf wenigstens einem Teil ihrer Länge ebenso ein Innengewinde aufweisen.

Als Halterung soll im Sinne der vorliegenden Erfindung das Achselement mit daran angeordneten Halteelement, Drehkörper, Kontermuttern bzw. Stellring verstanden werden. Vorzugsweise weist das Halteelement ein Innengewinde auf, das mit einer Kontermutter auf dem Achselement gekontert wird. Alternativ hierzu kann das Halteelement mit einem Stellring auf einem Achselement ohne Außengewinde fixiert werden.

Vorzugsweise weist der längs des Achselementes verschiebbare Drehkörper eine axiale, durchgehende Bohrung auf, deren Durchmesser größer als der des Achselementes ist. Dadurch kann der Drehkörper blitzschnell in Richtung Halteelement verschoben und mittels einer Kontermutter festgelegt werden. Selbstverständlich ist es möglich, anstelle der glatten Bohrung ein an das Außengewinde des Achselementes angepasstes Innengewinde vorzusehen, allerdings scheint das Eindrehen des Drehkörpers mühselig und zeitaufwendig zu sein. Mit dem verschiebbaren Drehkörper mit Kontermutter wird ein vorteilhaftes Schnellspannsystem geschaffen, das bei Felgen unterschiedlicher Größe ohne irgendwelche Konstruktionsänderungen eingesetzt werden kann.

Der Hebelmechanismus kann an sich bekannte Hebelarme aufweisen, von denen wenigstens der erste, längere, längenverstellbar sein kann. Die Hebelarme können zueinander unter einem Einstellwinkel zwischen 10° und 180°, vorzugsweise zwischen 45° und 90°, insbesondere bevorzugt zwischen 65° und 80° angeordnet sein.

In einer abweichenden Ausführungsform er Erfindung kann am Zapfen des Achselementes ein Antriebselement lösbar befestigt sein, mit dem die Drehbewegung des Rades auf ein an das Fahrzeug, insbesondere Kleintraktor angebautes Zusatzgerät übertragen werden kann. Das Antriebselement kann ein an sich bekanntes Antriebsrad sein, welches die Drehbewegung über Riemen oder Kette auf ein getriebenes Rad des Zusatzgerätes überträgt. Als Zusatzgerät kommt beispielsweise ein Düngerverteiler oder eine Kehrbürste in Frage.

Die Erfindung ist in zwei Ausführungsbeispielen anhand der Zeichnung näher erläutert. Die Figuren zeigen:
- Fig. 1a: eine Rasenkanten-Schneidvorrichtung im Einsatz, in einer schematischen Seitenansicht auf einen Kleintraktor;
- Fig. 1b: die Rasenkanten-Schneidvorrichtung gemäß Fig. 1a mit gehobenem Hebelarm;
- Fig. 2: ein Halteelement mit Spannarmen, in einer Draufsicht auf seine Flachseite und Mulde;
- Fig. 3: ein Achselement in einer schematischen Seitenansicht;
- Fig. 4: ein weiteres Achselement, ebenso in einer schematischen Seitenansicht;
- Fig. 5: ein am Zapfen des Achselementes eingesetztes Antriebrad mit Riemen, in einer schematischen Darstellung;
- Fig. 6: das Antriebrad im Querschnitt, mit angedeutetem Teil des Achselementes;
- Fig. 7: den Riemenantrieb im Einsatz, in einer schematischen Seitenansicht.

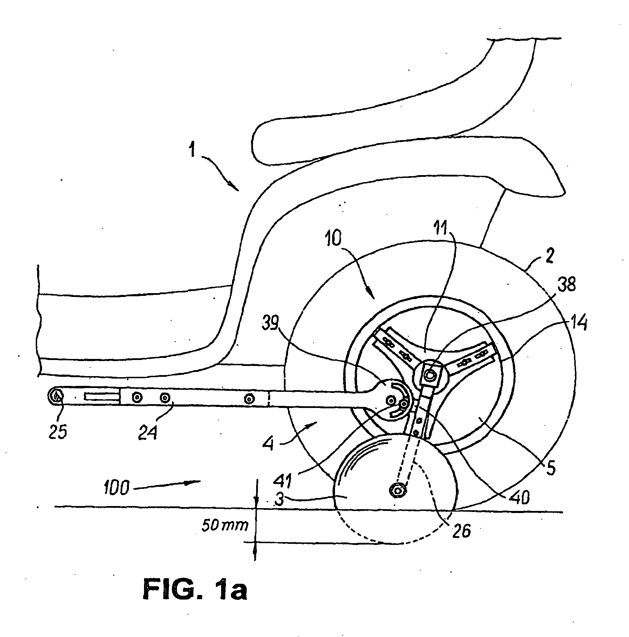

In Fig. 1a ist schematisch das Heck eines Kleintraktors 1 mit hinterem Rad 2 abgebildet, an dessen Außenseite eine Rasenkanten-Schneidvorrichtung 100 angeordnet ist. Darüber hinaus zeigt die Figur die in Fahrtrichtung linke Seite des Fahrzeugs.

Die Rasenkanten-Schneidvorrichtung 100 setzt sich aus folgenden Hauptteilen zusammen:
- aus einer Halterung 10, die direkt in eine Felge 5 einmontiert ist,
- aus einer rotierbaren Messerscheibe 3
- und aus einem Hebelmechanismus 4, der die Messerscheibe 3 trägt.

Gemäß Fig. 1a reicht die Messerscheibe 3 etwa 50 mm tief in den Rasen. Die Eindringtiefe ist mittels des Hebels 4 einstellbar.

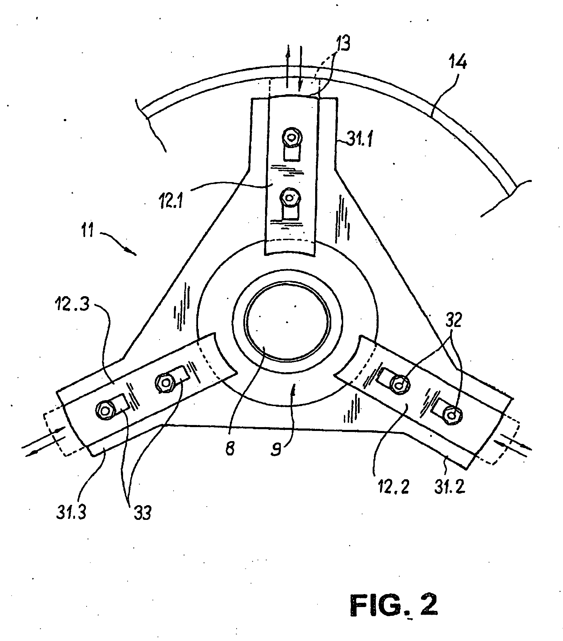

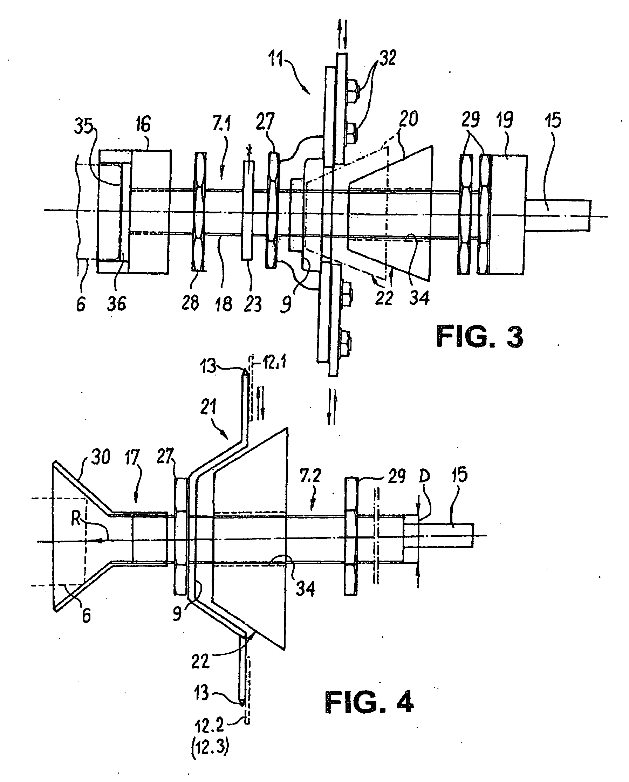

Die Halterung 10 besteht aus einem detailliert in Fig. 3 dargestellten, bolzenförmigen Achselement 7.1 mit daran angeordneten Teilen, die im Weiteren noch beschrieben werden, und aus einem in Fig. 2 abgebildeten Halteelement 11.

Das Halteelement 11 ist in Draufsicht auf seine Flachseite (vgl. Fig. 2) etwa sternförmig und weist drei radial angeordnete Arme 31.1, 31.2, 31.3 auf, die zueinander unter einem Winkel 120° stehen. Die Arme 31.1, 31.2, 31.3 sind wiederum jeweils über zwei Linsenkopfschrauben 32 mit radial beweglichen Spannarmen 12.1, 12.2, 12.3 verbunden. Die Beweglichkeit der Spannarme 12.1, 12.2, 12.3 sichern Langlöcher 33, die vorzugsweise rechteckig sind.

Mitten im Halteelement 11 befindet sich eine in einer Mulde 9 eingebrachte Öffnung 8. Vorzugsweise ist die Öffnung 8 eine Gewindeöffnung, so dass sich das Halteelement 11 auf das Achselement 7.1 eindrehen und dort mittels Kontermutter 27 festle^{g}en lässt. Zu diesem Zweck weist das Achselement 7.1 ein Außengewinde 18 auf, welches bis zu einem Anschlagelement 19 (vgl. Fig. 3) reicht.

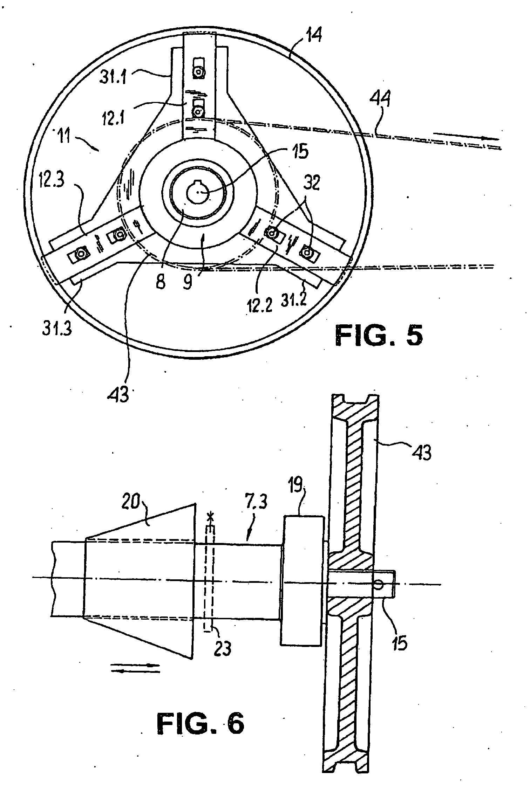

In die Mulde 9 greift ein massiver Drehkörper 20 (vgl. Figuren 3 und 4) ein, der verschiebbar entlang des Achselementes 7.1 angeordnet und ebenfalls mittels einer Kontermutter 29 festlegbar ist. Der Drehkörper 20 weist eine axiale Bohrung 34 auf, deren Durchmesser etwas größer als Außendurchmesser D des Achselementes 7.1, 7.2 ist, so dass der Drehkörper 20 über das Achselement in beide Längsrichtungen gleiten kann. Bei einem Achselement 7.3 ohne Außengewinde (vgl. Fig. 6) wird das Halteelement mittels eines Stellringes 23 festgelegt.

An einem freien Ende 17 des Achselementes 7.1 ist eine Gewindehülse 16 angeschraubt, deren Gewinde bis zu einer innenliegenden Blende 36 reicht. Die Blende 36 bildet zusammen mit dem über die Blende ragenden Teil der Hülse einen Sitz 35 zum Einsetzen an einer Radnabe 6 (linke Seite Fig.3).

Bei der Montage der Halterung 10 am Rad 2 wird das vorkomplettierte Achselement 7.1 (vgl. Fig. 3) mit seiner Gewindehülse 16 an der Radnabe 6 koaxial aufgesetzt. An das Achselement 7.1 sind die Kontermuttern 27,28,29 und das Halteelement 11 zuerst lose aufgeschraubt. Das Halteelement 11 wird in eine Stellung gebracht, in der sich die Spannarme 12.1, 12.2, 12.3 zumindest in etwa in einer Ebene mit einer am Felgenkranz 14 des Rades 2 vorgesehenen Klemmstelle befinden. Bei dieser am Felgenkranz vorgesehenen Klemmstelle handelt es sich vorzugsweise um eine nutartige Vertiefung in der Felge, welche ein Abrutschen der Spannarme beim Klemmen verhindert. Nicht ausgeschlossen sind jedoch auch andere Sicherungselemente, mit denen die Spannarme 12.1, 12.2, 12.3 an ihren Enden 13 gehalten werden können, beispielsweise auf den Felgenkranz aufgebrachte Anschläge, gegen die sich die Spannarme 12.1, 12.2, 12.3 abstützen können (nicht dargestellt). Nachdem das Haltelement 11 in die gewünschte Stellung gebracht worden ist, wird es mittels der Kontermutter 27 in dieser Position fixiert. Diese Fixierung des Halteelementes 11 wird vorgenommen um die Vorrichtung einmalig auf einen bestimmten Felgentyp bzw. Felgendurchmesser einzustellen. Für den An- und Abbau des Halteelementes auf diese Felge bzw. eine andere Felge gleichen Typs, ist es danach nur noch erforderlich, die Spannarme 12.1, 12.2, 12.3 mittels des Drehkörpers 20 gegen die Felge anzupressen bzw. zu lösen.

Das Anpressen der Spannarme 12.1, 12.2, 12.3 erfolgt, indem der Drehkörper 20 derart in die Mulde 9 geschoben wird, dass seine Oberfläche 22 (vgl. Fig. 3) gegen die Spannarme 12.1, 12.2, 12.3 drückt, die infolge dessen sich zwangsläufig radial nach außen bewegen und mit ihrem freien Ende 13 gegen einen Felgenkranz 14 (vgl. Fig. 2) drücken. Die Arretierung des Drehkörpers 20 und der Spannarme 12.1, 12.2, 12.3 erfolgt mittels Kontermuttern 29.

An der in die Felge 5 eingeklemmten Halterung 10 wird der Hebelmechanismus 4 angebracht. An seinem kürzeren Hebelarm 26 befindet sich eine Lagerbüchse 38, die an einen Zapfen 15 des Achselementes 7.1 bis zum Anschlagelement 19 aufgeschoben und dort längsaxial gesichert wird. Ein zweiter, längerer Hebelarm 24 ist unter einem spitzen Einstellwinkel a gegenüber dem kürzeren Hebelarm 26 angeordnet. Der Einstellwinkel α beträgt im vorliegenden Fall etwa 70°. Am freien Ende des längeren Hebelarms 24 befindet sich noch ein Griff 25. Im eingesetzten Zustand (vgl. Fig. 1a) der Vorrichtung liegt der längere Hebelarm 24 etwa parallel zur Fahrbahn.

Zwischen dem kürzeren Hebelarm 26 und einem dem Griff 25 gegenüber liegenden Kopfstück 39 des längeren Hebelarms 24 befindet sich ein kurzes Verbindungsstück 40, das über eine Schraube 41 mit dem Kopfstück 39 lösbar verbunden ist. Die Schraube 41 bzw. deren Längsachse liegt in einem Scheitel des Schwenkwinkels α der beiden Hebelarme 24; 26. Die Schraube 41 kann als Sicherungselement ausgelegt sein, um die Vorrichtung insgesamt gegen Überlast zu schützen. Eine solche Überlast kann auftreten, wenn im Boden ein Stein vorhanden ist und die Messerscheibe 3 auf diesen Stein trifft. In diesem Fall kann die Schraube beispielsweise als Scherschraube oder als Rutschkupplung ausgelegt sein, um ein Ausweichen der Schneidscheibe über ein Hindernis hinweg zu ermöglichen. Darüber hinaus kann ein Federelement (nicht dargestellt) vorgesehen sein, mit Hilfe dessen die Schneidscheibe nach Überfahren des Hindernisses wieder in Arbeitsstellung gebracht wird.

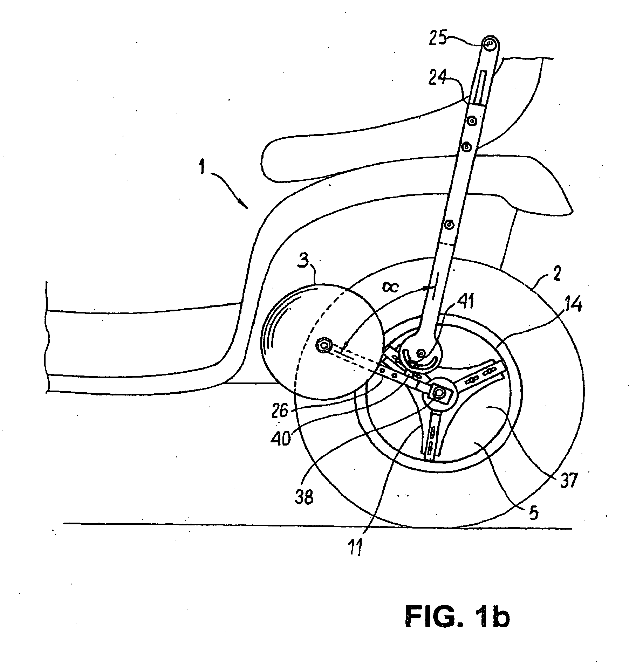

Das Heben der Messerscheibe 3 erfolgt durch das Betätigen des längeren Hebelarms 24 (vgl. Fig. 1b).

Eine andere Ausführungsform der Vorrichtung stellt die Fig. 4 dar. An das freie Ende 17 des Achselementes 7.2 ist ein trichterförmiges, an jede Radnabe passendes Aufsatzstück 30 aufgeschraubt, das im Einsatzfall in Axialrichtung R gegen die Radnabe drückt. Ein Halteelement 21 ist von seiner Form her dem Halteelement 11 ähnlich mit dem Unterschied, dass es in einem Materialstück aus Metallblech gefertigt ist. Der in die Mulde 9 eingreifende Drehkörper 20 stößt gegen eine Seitenwand 42 der Mulde 9, so dass die Enden 13 des sich biegenden Halteelementes 21 federnd gegen den Felgenkranz drücken können. Selbstverständlich ist es möglich, am Halteelement 21 bewegliche Spannarme 12.1, 12.2, 12.3 einzusetzen, wie es in Fig. 4 mit Strichlinien dargestellt ist.

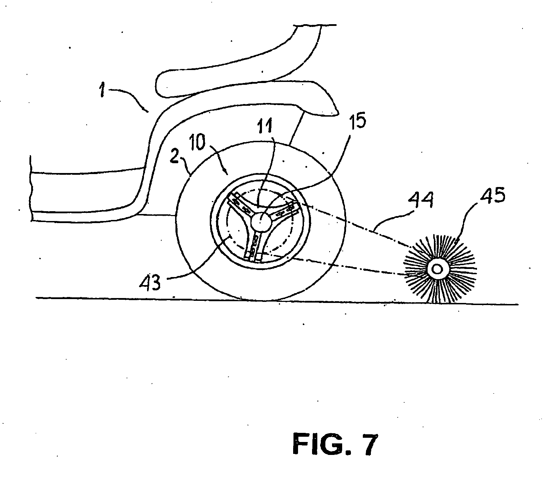

In Figuren 5 und 6 ist ein am Zapfen 15 eingesetztes, scheibenförmiges Antriebsrad 43 gezeigt, welches die Drehbewegung des Rades 2 über einen Riemen 44 auf ein angetriebenes Rad eines Zusatzgerätes 45, in vorliegendem Fall einer Kehrbürste (vgl. Fig. 7) überträgt.

Möglich ist ferner, die Schwenkbewegung des Hebelarms 24 mit Hilfe zweier, vorzugsweise verstellbarer Anschläge zu begrenzen (nicht dargestellt). Mit Hilfe solcher Anschläge kann auch die Schneidtiefe der Messerscheibe 3 auf einfache Weise eingestellt werden.

Es ist denkbar, beispielsweise am kürzeren Hebelarm 26 ein arretierbares Gelenk vorzusehen, mit dem ein Winkel zwischen der Messerscheibe-Ebene und der Fahrtrichtung eingestellt werden kann.

**Bezugszeichenliste:**

| | |
|---|---|
| 1 | Kleintraktor |
| 2 | Rad |
| 3 | Messerscheibe |
| 4 | Hebelmechanismus |
| 5 | Felge |
| 6 | Radnabe |
| 7.1,7.2, 7.3 | Achselement |
| 8 | Öffnung |
| 9 | Mulde |
| 10 | Halterung |
| 11 | Halteelement |
| 12.1, 12.2, 12.3 | Spannarm |
| 13 | Ende |
| 14 | Felgenkranz |
| 15 | Zapfen |
| 16 | Gewindehülse |
| 17 | Ende |
| 18 | Außengewinde |
| 19 | Anschlagelement |
| 20 | Drehkörper |
| 21 | Halteelement |
| 22 | Oberfläche |
| 23 | Stellring |
| 24 | Hebelarm |
| 25 | Griff |
| 26 | Hebelarm |
| 27, 28, 29 | Kontermutter |
| 30 | Aufsatzstück |
| 31.1, 31.2, 31.3 | Arm |
| 32 | Linsenkopfschraube |
| 33 | Langloch |
| 34 | Bohrung |
| 35 | Sitz |
| 36 | Blende |
| 37 | Felgenflansch |
| 38 | Lagerbüchse |
| 39 | Kopfstück |
| 40 | Verbindungsstück |
| 41 | Schraube |
| 42 | Seitenwand |
| 43 | Antriebsrad |
| 44 | Riemen |
| 45 | Kehrbürste |
| | |
| α | Einstellwinkel |
| D | Außendurchmesser |
| R | Axialrichtung |
| 100 | Rasenkanten-Schneideinrichtung |

## Patentansprüche

1. An einem selbstfahrenden Fahrzeug lösbar anbringbare Rasenkanten-Schneidvorrichtung (100), umfassend:
- eine Halterung (10), die an einer Felge (5) eines Rades (2) des Fahrzeuges, auf dessen Außenseite angeordnet ist, wobei die Halterung (10) wenigstens ein Halteelement (11; 21) aufweist, das an der Felge (5) des Rades (2) kraft- und/oder formschlüssig abnehmbar befestigbar ist
- eine rotierbare Messerscheibe (3),
- und einem Hebelmechanismus (4) zum Verstellen der Messerscheibe (3),
**dadurch gekennzeichnet, dass**
- die Halterung (10) ein Achselement (7.1, 7.2) umfasst,
- der Hebelmechanismus (4) einen ersten, mit einem Griff (25) versehenen Hebelarm (24) und einen zweiten, gegenüber dem ersten unter einem Einstellwinkel (α) angeordneten und die Messerscheibe (3) tragenden Hebelarm (26) aufweist.
- das Halteelement (11; 21) eine zentral angeordnete Öffnung (8) zur Durchführung des Achselementes (7.1; 7.2) aufweist,
- das Achselement (7.1; 7.2) in einer Axialrichtung (R) auf einer Radnabe (6) festlegbar ist und sich gegen das Halteelement (11; 21) abstützt,
- und dass das Achselement (7.1; 7.2) einen Zapfen (15) aufweist, auf den der die Messerscheibe (3) tragende Hebelmechanismus (4) aufgesetzt ist, wobei der Zapfen (15) des Achselementes (7.1; 7.2) im montierten Zustand in einer Lagerbüchse (38) gelagert ist, die am zweiten, die Messerscheibe (3) tragenden Hebelarm (26) angeordnet ist.

2. Rasenkanten-Schneidvorrichtung nach Anspruch 1, **dadurch gekennzeichnet, dass**
- das Halteelement (11) stern- oder rundscheibenförmig oder dreieckig ist,
- das Halteelement (11) wenigstens drei radial verstellbare Spannarme (12.1, 12.2, 12.3) aufweist, deren freie Enden (13) im einmontierten Zustand auf einen Felgenkranz (14) gerichtet sind.

3. Rasenkanten-Schneidvorrichtung nach Anspruch 1, **dadurch gekennzeichnet, dass**
- das Halteelement (21) in einem Stück aus Metallblech gefertigt ist,
- das Halteelement (21) eine mittig liegende, sich bis zur Öffnung (8) hin verjüngende Mulde (9) aufweist.

4. Rasenkanten-Schneidvorrichtung nach Anspruch 1, **dadurch gekennzeichnet, dass**
- am Achselement (7.1; 7.2) ein Außengewinde (18) eingebracht ist, das sich bis zum Zapfen (15) oder einem am Zapfen angeordneten Anschlagelement (19) erstreckt,
- das Achselement (7.1; 7.2) an seinem dem Zapfen (15) gegenüber liegenden, freien Ende (17) eine Gewindehülse (16) oder ein trichterförmiges Aufsatzstück (30) zum Aufsetzen an der Radnabe (6) trägt und am Achselement (7.1; 7.2) ein gegen das Halteelement (11; 21) zu drückender, stumpfkegeliger Drehkörper (20) längsverschiebbar angeordnet ist.

5. Rasenkanten-Schneidvorrichtung nach Anspruch 3 oder 4, **dadurch gekennzeichnet, dass** der Drehkörper (20) mit seiner kegeligen Oberfläche (22) gegen die beweglichen Spannarme (12.1, 12.2, 12.3) des Halteelementes (11; 21) und dadurch gegen den Felgenkranz (14) drückt.

6. Rasenkanten-Schneidvorrichtung nach einem der vorhergehenden Ansprüche, **dadurch gekennzeichnet, dass** das Außengewinde (18) des Achselementes (7.1; 7.2) wenigstens eine Kontermutter (27, 28, 29) zum Festlegen des Halteelementes (11; 21), des Drehkörpers (20) und der Gewindehülse (16) bzw. des trichterförmigen Aufsatzstücks (30) trägt.

7. Rasenkanten-Schneidvorrichtung nach einem der vorhergehenden Ansprüche, **dadurch gekennzeichnet, dass** am Achselement (7.1; 7.2) wenigstens ein Stellring (23) angeordnet ist.

8. Rasenkanten-Schneidvorrichtung nach einem der vorhergehenden Ansprüche, **dadurch gekennzeichnet, dass** der Einstellwinkel (α) zwischen 10° und 180°, vorzugsweise zwischen 45° und 90° liegt.

9. Rasenkanten-Schneidvorrichtung nach einem der vorhergehenden Ansprüche, **dadurch gekennzeichnet, dass** eine Achsverlängerung zur Montage an ein Achselement einer Rasenkanten-Schneidvorrichtung vorgesehen ist, wobei die Achsverlängerung ein Antriebselement (43, 44) umfasst, mit welchem die Drehbewegung des Rades (2) auf ein an das Fahrzeug, insbesondere Kleintraktor angebautes Zusatzgerät (45) übertragen werden kann.

## Claims

1. Lawn edge cutting device (100) releasably attachable to an automotive vehicle, comprising:
- a holder (10) which is disposed on a wheel rim (5) of a wheel (2) of the vehicle, on the outside thereof, wherein the holder (10) has at least one holding element (11; 21) which can be detachably attached to the wheel rim (5) of the wheel (2) in a non-positive or positive manner,
- a rotatable cutter disc (3),
- and a lever mechanism (4) for adjusting the cutter disc (3),
**characterised in that**
- the holder (10) comprises an axle element (7.1, 7.2),
- the lever mechanism (4) comprises a first lever arm (24) provided with a handle (25), and a second lever arm (26) disposed at a setting angle (α) with respect to the first lever arm and supporting the cutter disc (3),
- the holding element (11; 21) comprises a centrally disposed opening (8) for passage of an axle element (7.1; 7.2),
- the axle element (7.1; 7.2) can be fixed in an axial direction (R) on a wheel hub (6) and is supported against the holding element (11; 21),
- and that the axle element (7.1; 7.2) has a spigot (15) on which the lever mechanism (4) supporting the cutter disc (3) is placed, wherein, in the mounted condition, the spigot (15) of the axle element (7.1; 7.2) is mounted in a bearing bushing (38) which is disposed on the second lever arm (26) supporting the cutter disc (3).

2. Lawn edge cutting device as claimed in claim 1, **characterised in that**
- the holding element (11) is in the shape of a star or a round disc or is triangular,
- the holding element (11) comprises at least three radially adjustable clamping arms (12.1, 12.2, 12.3), the free ends (13) of which, in the installed condition, are oriented towards a wheel rim collar (14).

3. Lawn edge cutting device as claimed in claim 1, **characterised in that**
- the holding element (21) is produced as one piece from sheet metal,
- the holding element (21) comprises a centrally located trough (9) tapering towards the opening (8).

4. Lawn edge cutting device as claimed in claim 1, **characterised in that**
- an external thread (18) is provided on the axle element (7.1; 7.2) and extends as far as the spigot (15) or a stop element (19) disposed on the spigot,
- on its free end (17) opposite the spigot (15), the axle element (7.1; 7.2) carries a threaded sleeve (16) or a funnel-shaped attachment piece (30) for placement on the wheel hub (6), and a rotary body (20) in the shape of a truncated cone, which is to be pressed against the holding element (11; 21), is disposed in a longitudinally displaceable manner on the axle element (7.1; 7.2).

5. Lawn edge cutting device as claimed in claim 3 or 4, **characterised in that** the rotary body (20) presses with its conical surface (22) against the movable clamping arms (12.1, 12.2, 12.3) of the holding element (11; 21) and therefore against the wheel rim collar (14).

6. Lawn edge cutting device as claimed in any one of the preceding claims, **characterised in that** the external thread (18) of the axle element (7.1; 7.2) supports at least one counter nut (27, 28, 29) to fix the holding element (11; 21), the rotary body (20) and the threaded sleeve (16) or the funnel-shaped attachment piece (30).

7. Lawn edge cutting device as claimed in any one of the preceding claims, **characterised in that** at least one setting ring (23) is disposed on the axle element (7.1; 7.2).

8. Lawn edge cutting device as claimed in any one of the preceding claims, **characterised in that** the setting angle (α) is between 10° and 180°, preferably between 45° and 90°.

9. Lawn edge cutting device as claimed in any one of the preceding claims, **characterised in that** an axle extension for mounting on an axle element of a lawn edge cutting device is provided, wherein the axle extension includes a drive element (43, 44) with which the rotary movement of the wheel (2) can be transferred to an add-on apparatus (45) attached to the vehicle, in particular a small tractor.

## Revendications

1. Dispositif coupe-bordure (100) apte à être monté amovible sur un véhicule autoporté, comprenant :
- un système de support (10) agencé sur une jante (5) d'une roue (2) dudit véhicule, sur le côté extérieur de ladite roue, le système de support (10) incluant au moins un élément de maintien (11 ; 21) apte à être fixé amovible, par coopération de forme et/ou par friction, sur la jante (5) de la roue (2),
- un disque de coupe (3) rotatif
- et un mécanisme à levier (4) pour le réglage du disque de coupe (3),
caractérisé,
- premièrement, en ce que le système de support (10) inclut un axe (7.1 ; 7.2),
- deuxièmement, en ce que le mécanisme à levier (4) possède un premier bras de levier (24) doté d'une poignée (25) ainsi qu'un second bras de levier (26) portant le disque de coupe (3) et agencé par rapport au premier bras (24) selon un angle de réglage (α),
- troisièmement, en ce que l'élément de maintien (11 ; 21) possède un orifice central (8) à travers lequel passe l'axe (7.1 ; 7.2),
- quatrièmement, en ce que l'axe (7.1 ; 7.2) peut être bloqué dans le sens axial (R) sur un moyeu de roue (6) et s'appuie contre l'élément de maintien (11 ; 21)
- et cinquièmement, en ce que l'axe (7.1 ; 7.2) possède un tourillon (15) sur lequel est monté le mécanisme à levier (4) portant le disque de coupe (3), ledit tourillon (15) de l'axe (7.1 ; 7.2) étant, à l'état monté, logé dans un coussinet (38) agencé sur le second bras de levier (26) qui porte le disque de coupe (3).

2. Dispositif coupe-bordure selon la revendication 1, caractérisé, premièrement, en ce que l'élément de maintien (11) est en forme d'étoile ou de plaque circulaire ou de triangle et, deuxièmement, en ce que ledit élément de maintien (11) possède au moins trois bras tendeurs (12.1, 12.2, 12.3) réglables radialement, dont les extrémités libres (13) sont orientées, à l'état monté, vers une couronne de jante (14).

3. Dispositif coupe-bordure selon la revendication 1, **caractérisé en ce que** l'élément de maintien (21) est fabriqué d'un seul tenant en tôle métallique et **en ce qu'**il possède, en son centre, un creux (9) qui s'amincit jusqu'à l'orifice (8).

4. Dispositif coupe-bordure selon la revendication 1, caractérisé
- premièrement, en ce que l'axe (7.1 ; 7.2) est doté d'un filetage extérieur (18) qui s'étend jusqu'au tourillon (15) ou jusqu'à une butée (19) agencée sur ledit tourillon,
- deuxièmement, en ce que l'axe (7.1 ; 7.2) porte, à son extrémité libre (17) opposée au tourillon (15), une douille taraudée (16) ou une collerette (30) en entonnoir permettant de monter l'axe sur le moyeu de roue (6)
- et troisièmement, en ce que l'axe (7.1 ; 7.2) est doté d'un corps rotatif (20) en forme de cône tronqué, apte à être déplacé longitudinalement et poussé contre l'élément de maintien (11 ; 21).

5. Dispositif coupe-bordure selon la revendication 3 ou 4, **caractérisé en ce que** le corps rotatif (20) appuie, par sa surface conique (22), contre les bras tendeurs mobiles (12.1, 12.2, 12.3) de l'élément de maintien (11 ; 21) et, par conséquent, contre la couronne de jante (14).

6. Dispositif coupe-bordure selon l'une quelconque des revendications précédentes, **caractérisé en ce que** le filetage extérieur (18) de l'axe (7.1 ; 7.2) est doté d'au moins un contre-écrou (27, 28, 29) destiné à bloquer l'élément de maintien (11 ; 21), le corps rotatif (20) et la douille taraudée (16) ou la collerette (30) en entonnoir.

7. Dispositif coupe-bordure selon l'une quelconque des revendications précédentes, **caractérisé par** la présence, sur l'axe (7.1 ; 7.2), d'au moins une bague de réglage (23).

8. Dispositif coupe-bordure selon l'une quelconque des revendications précédentes, **caractérisé en ce que** l'angle de réglage (α) est compris entre 10 et 180 degrés, de préférence entre 45 et 90 degrés.

9. Dispositif coupe-bordure selon l'une quelconque des revendications précédentes, **caractérisé en ce qu'**il est prévu un prolongateur d'axe à monter sur un axe de dispositif coupe-bordure, ledit prolongateur comprenant un mécanisme d'entraînement (43, 44) par le biais duquel le mouvement rotatif de la roue (2) peut être transmis à un appareil auxiliaire (45) monté sur le véhicule, en particulier sur un petit tracteur.
